# EUROPEAN PATENT APPLICATION

(11) **EP 4 206 999 A1**
(43) Date of publication of application: **05.07.2023**
(21) Application number: 21944422.1
(22) Date of filing: 30.12.2021
(51) Int. Cl.: G06N 3/08, G06N 3/063, G06N 3/04

(54) **ARTIFICIAL INTELLIGENCE CORE, ARTIFICIAL INTELLIGENCE CORE SYSTEM, AND LOADING/STORING METHOD OF ARTIFICIAL INTELLIGENCE CORE SYSTEM**

(30) Priority: 02.11.2021 KR 20210149224
(71) Applicant: Rebellions Inc., Seongnam-si, Gyeonggi-do 13556 (KR)
(72) Inventor: OH, Jin Wook, Seongnam-si, Gyeonggi-do 13556 (KR); KIM, Jin Seok, Seongnam-si, Gyeonggi-do 13556 (KR); KIM, Dong Han, Seongnam-si, Gyeonggi-do 13556 (KR); BONG, Kyeong Ryeol, Seongnam-si, Gyeonggi-do 13556 (KR)
(74) Representative: Frenkel, Matthias Alexander
(86) International application number: PCT/KR2021/020260
(87) International publication number: WO 2023/080333

(57) **Abstract**

An AI core, an AI core system and a load/store method of the AI core system are provided. The AI core includes: a processing unit configured to receive an input activation and a weight and generate an output activation by a two-dimensional matrix calculation, and a load/store unit configured to transmit program received through a external interface and input data to an on-chip buffer and to perform a load/store operation for transmitting output data from the on-chip buffer to the external interface, wherein the load/store operation includes a main load/store operation for a current operation that is performed by the processing unit, and a standby load/store operation for a standby operation that is performed by the processing unit after the current operation.

## Description

### TECHNICAL FIELD

The disclosure relates to an AI core, an AI core system and a load/store method of the AI core system. Specifically, the disclosure relates to an AI core, an AI core system and a load/store method of the AI core system for maximizing use of the AI core.

### BACKGROUND

For the last few years, artificial intelligence (AI) technology has been the core technology of the Fourth Industrial Revolution and the subject of discussion as the most promising technology worldwide. The biggest problem with such artificial intelligence technology is computing performance. For artificial intelligence technology which realizes human learning ability, reasoning ability, perceptual ability, natural language implementation ability, etc., it is of utmost important to process a large amount of data quickly.

The central processing unit (CPU) or graphics processing unit (GPU) of off-the-shelf computers was used for deep-learning training and inference in early artificial intelligence, but had limitations on the tasks of deep-learning training and inference with high workloads, and thus, neural processing units (NPUs) that are structurally specialized for deep learning tasks have received a lot of attention.

An AI core includes a large number of multiplication devices therein, and it is difficult to secure a sufficient bandwidth for fetching data and programs necessary for calculations of the multiplication devices.

Therefore, it may be a very good technique to improve performance of the AI core by using a method of loading in time series programs and data necessary for the next job in advance.

### SUMMARY

Aspects of the disclosure provide an AI core capable of efficiently maximizing a bandwidth with an external interface.

Aspects of the disclosure provide an AI core system capable of efficiently maximizing a bandwidth with an external interface.

Aspects of the disclosure provide a load/store method of an AI core system capable of efficiently maximizing a bandwidth with an external interface.

Aspects of the disclosure are not limited to those mentioned above, and other objects and advantages of the disclosure that have not been mentioned can be understood by the following description, and will be more clearly understood by embodiments of the disclosure. In addition, it will be readily understood that the objects and advantages of the disclosure can be realized by the means and combinations thereof set forth in the claims.

According to some aspects of the disclosure, an AI core includes: a processing unit configured to receive an input activation and a weight and generate an output activation by two-dimensional matrix calculation, and a load/store unit configured to transmit a program received through an external interface and input data to an on-chip buffer, and to perform a load/store operation for transmitting output data from the on-chip buffer to the external interface, wherein the load/store operation includes a main load/store operation for a current operation that is performed by the processing unit, and a standby load/store operation for a standby operation that is performed by the processing unit after the current operation.

According to some aspects, the AI core further includes: an activation buffer configured to provide the input activation to the processing unit, receive the output activation from the processing unit, and temporarily store the input activation and the output activation, the on-chip buffer configured to temporarily store the program used for the calculation which is performed by the processing unit and the input data including the input activation and the weight, transmit the stored program and the input data to the processing unit and temporarily store the output data received from the processing unit, and an activation load/store unit configured to transmit the input activation from the on-chip buffer to the activation buffer and transmit the output activation from the activation buffer to the on-chip buffer.

According to some aspects, the standby load/store operation is performed by using a bandwidth that is not used by the main load/store operation among bandwidths of the external interface.

According to some aspects, the load/store unit includes: a main load/store unit configured to perform the main load/store operation and transmit first load data and first store data to the on-chip buffer, and a hidden load/store unit configured to perform the standby load/store operation and transmit second load data and second store data to the on-chip buffer.

According to some aspects, the hidden load/store unit includes: a hidden load unit configured to fetch a standby load instruction received from a task controller to issue the standby load instruction, a hidden store unit configured to fetch a standby store instruction received from the task controller to issue the standby store instruction, a hidden load buffer configured to sequentially receive a memory access request corresponding to the standby load instruction from the hidden load unit, a hidden store buffer configured to sequentially receive a memory access request corresponding to the standby store instruction from the hidden store unit, a hidden load engine configured to receive the memory access request from the hidden load buffer and transmit the second load data to the on-chip buffer, and a hidden store engine configured to receive the memory access request from the hidden store buffer and transmit the second store data to the on-chip buffer.

According to some aspects, the load/store unit further includes a translation lookaside buffer configured to store a translation table of recently used virtual memory addresses and physical memory addresses.

According to some aspects, the main load/store unit includes: a load unit configured to fetch a load instruction and to issue the load instruction, a store unit configured to fetch a store instruction and to issue the store instruction, a load buffer configured to sequentially receive a memory access request from the load unit, a store buffer configured to sequentially receive a memory access request from the store unit, a load engine configured to receive the memory access request from the load buffer and transmit the first load data to the on-chip buffer, and a store engine configured to receive the memory access request from the store buffer and transmit the first store data to the on-chip buffer.

According to some aspects, the first load data has a higher priority than the second load data, and the first store data has a higher priority than the second store data.

According to some aspects, the priority is tagged to the first load data, the second load data, the first store data, and the second store data.

According to some aspects, the priority is tagged by the load engine or the store engine.

According to some aspects, the load/store unit further includes an arbiter configured to receive the first load data, the second load data, the first store data, and the second store data and transmit the first load data, the second load data, the first store data, and the second store data to the on-chip buffer in a round-robin manner.

According to some aspects, the on-chip buffer includes a plurality of banks, a value obtained by dividing a number of inputs of the first load data, the second load data, the first store data, and the second store data per unit clock cycle by a number of banks of the on-chip buffer is less than a reference input/output ratio of the arbiter, and the reference input/output ratio is a largest input/output ratio value in a range in which waiting time of each of the first load data, the second load data, the first store data, and the second store data does not occur by the arbiter.

According to some aspects, the hidden load/store unit and the main load/store unit share at least a part of hardware with each other.

According to some aspects, the hidden load/store unit and the main load/store unit are implemented by different hardware.

According to some aspects, the processing unit includes: a PE array configured to perform two-dimensional matrix calculation for sequentially multiplying the input activation and the weight, and to generate the output activation, and a vector unit configured to perform one-dimensional calculation.

According to some aspects, the external interface includes any one of a data bus, an external chip interface, or a local bus.

According to some aspects of the disclosure, an AI core system includes a memory for storing a program for calculation and input data, a bus for transmitting the input data and a control signal from the memory, and an AI core for receiving the program, the input data, and the control signal to perform two-dimensional matrix calculation, and generates output data, wherein the AI core includes: a load/store unit configured to load the program and the input data from the memory and store the output data in the memory, a processing unit configured to perform calculation by using the program and the input data, and an on-chip buffer configured to temporarily store the program, the input data, and the output data between the processing unit and the load/store unit, wherein the bus includes a control bus for transmitting the control signal and a data bus for transmitting the input data and the output data, the load/store unit performs a main load/store operation for a current operation currently performed by the processing unit, and a standby load/store operation for a standby operation performed by the processing unit after the current operation, and the standby load/store operation is performed by using a bandwidth that is not used by the main load/store operation among bandwidths of the data bus.

According to some aspects, the memory includes an on-chip memory that is formed in the same chip as the AI core, and an off-chip memory that is formed separately from the AI core.

According to some aspects, the AI core system, wherein the AI core is a first AI core, further includes: a second AI core different from the first AI core, wherein the bus includes a local bus for transmitting the input data and the output data between the first AI core and the second AI core, wherein the load/store unit performs the standby load/store operation by using a bandwidth that is not used by the main load/store operation among bandwidths of the local bus.

According to some aspects, the load/store unit includes a main load/store unit configured to perform the main load/store operation, and a hidden load/store unit configured to perform the standby load/store operation, and the standby load/store operation has a lower priority than the main load/store operation.

According to some aspects, the priority is identified in a tagged form.

According to some aspects, the AI core, further includes: an activation buffer configured to provide an input activation to the processing unit and receive an output activation from the processing unit, and an activation load/store unit configured to fetch the input activation from the on-chip buffer, transmit the input activation to the activation buffer, and transmit the output activation from the activation buffer to the on-chip buffer.

According to some aspects of the disclosure, a load/store method of an AI core system, includes: loading a first program for a first work by a main load/store unit, executing the first work by using the first program, loading, by a hidden load/store unit, a second program for a second work to be executed after the first work, when the main load/store unit does not operate during the first work, and executing the second work by using the second program when the first work and the loading of the second program are completed.

According to some aspects, the loading of the second program includes: fetching a standby load instruction for the second program, issuing the fetched standby load instruction, transmitting a memory access request corresponding to the issued standby load instruction to a hidden load buffer, sequentially transmitting, by the hidden load buffer, the memory access request to a load engine, receiving, by the load engine, second load data from an off-chip memory through a data bus according to the memory access request, and transmitting the second load data to an on-chip buffer.

According to some aspects, the loading of the first program includes: fetching a load instruction for the first program, issuing the fetched load instruction, transmitting a memory access request corresponding to the issued load instruction to a load buffer, sequentially transmitting, by the load buffer, the memory access request to the load engine, receiving, by the load engine, first load data from the off-chip memory through the data bus according to the memory access request, and transmitting the first load data to the on-chip buffer.

According to some aspects, the first load data has a higher priority than the second load data.

According to some aspects of the disclosure, a load/store method of an AI core system, includes: performing, by a main load/store unit, a load operation of first data for a first work, executing the first work by using the first data, performing, by a hidden load/store unit, a load operation of second data for a second work to be executed after the first work, when checking that the main load/store unit does not operate during the first work, and executing the second work by using the second data when the first work and the load operation of the second data are completed.

According to some aspects, the first work is a matrix calculation operation of a first layer of a neural network, the second work is a matrix calculation operation of a second layer of the neural network, and the second data is kernel data of the second layer.

According to some aspects, the first data includes an input activation, and the executing of the first work includes: storing the input activation in an activation buffer, generating an output activation by receiving, the input activation by a processing unit from the activation buffer, and storing the output activation in the activation buffer.

According to an AI core, an AI core system and a load/store method of the AI core system of the disclosure, data or a program for the next job may be loaded in advance by optimally utilizing a bandwidth of an interface connecting the AI core to an external device.

In addition, it is possible to prevent a current operation from being delayed by preventing a load/store operation of a program and data for the next job from delaying a load/store operation of a program and data for an operation currently being performed.

Furthermore, it is possible to greatly increase utilization efficiency of hardware by sharing a main load/store unit and a hidden load/store unit.

In addition to the foregoing, the specific effects of the disclosure will be described together while elucidating the specific details for carrying out the embodiments below.

### BRIEF DESCRIPTION OF THE DRAWINGS

FIG. 1 is a block diagram for illustrating an AI core system in accordance with some embodiments;
FIG. 2 is a block diagram for illustrating the AI core of FIG. 1;
FIG. 3 is a block diagram for illustrating the processing unit of FIG. 2;
FIG. 4 is a conceptual diagram for illustrating a structure of neural network of deep learning operation performed by the processing unit of FIG. 3;
FIG. 5 is a block diagram for illustrating an operation of the load/store unit of FIG. 2;
FIG. 6 is a block diagram specifically illustrating a structure of the load/store unit of FIG. 5;
FIG. 7 is a time diagram illustrating in time series a program load operation of an AI core system in accordance with some embodiments;
FIG. 8 is a time diagram illustrating in time series a data prefetch operation of an AI core system in accordance with some embodiments;
FIG. 9 is a block diagram specifically illustrating a structure of a main load/store unit of an AI core in accordance with some embodiments;
FIG. 10 is a block diagram specifically illustrating a hidden load/store unit of an AI core in accordance with some embodiments;
FIG. 11 is a block diagram for illustrating an AI core system in accordance with some embodiments;
FIG. 12 is a block diagram for illustrating an AI core system in accordance with some embodiments;
FIG. 13 is a block diagram specifically illustrating a structure and an operation of the first AI core of FIG. 12;
FIG. 14 is a flowchart illustrating a load/store method of an AI core system in accordance with some embodiments;
FIG. 15 is a flowchart specifically illustrating the loading a first program of FIG. 14;
FIG. 16 is a flowchart specifically illustrating the loading a second program of FIG. 14;
FIG. 17 is a flowchart illustrating a load/store method of an AI core system in accordance with some embodiments;
FIG. 18 is a flowchart specifically illustrating the executing the first work of FIG. 17.

### DETAILED DESCRIPTION

The terms or words used in the disclosure and the claims should not be construed as limited to their ordinary or lexical meanings. They should be construed as the meaning and concept in line with the technical idea of the disclosure based on the principle that the inventor can define the concept of terms or words in order to describe his/her own embodiments in the best possible way. Further, since the embodiment described herein and the configurations illustrated in the drawings are merely one embodiment in which the disclosure is realized and do not represent all the technical ideas of the disclosure, it should be understood that there may be various equivalents, variations, and applicable examples that can replace them at the time of filing this application.

Although terms such as first, second, A, B, etc. used in the description and the claims may be used to describe various components, the components should not be limited by these terms. These terms are used only for the purpose of distinguishing one component from another. For example, a first component may be referred to as a second component, and similarly, a second component may be referred to as a first component, without departing from the scope of the disclosure. The term 'and/or' includes a combination of a plurality of related listed items or any item of the plurality of related listed items.

The terms used in the description and the claims are merely used to describe particular embodiments and are not intended to limit the disclosure. Singular expressions include plural expressions unless the context explicitly indicates otherwise. In the application, terms such as "comprise," "have," "include", "contain," etc. should be understood as not precluding the possibility of existence or addition of features, numbers, steps, operations, components, parts, or combinations thereof described herein.

Unless otherwise defined, all terms used herein, including technical or scientific terms, have the same meaning as commonly understood by those of ordinary skill in the art to which the disclosure pertains.

Terms such as those defined in commonly used dictionaries should be construed as having a meaning consistent with the meaning in the context of the relevant art, and are not to be construed in an ideal or excessively formal sense unless explicitly defined in the disclosure.

In addition, each configuration, procedure, process, method, or the like included in each embodiment of the disclosure may be shared to the extent that they are not technically contradictory to each other.

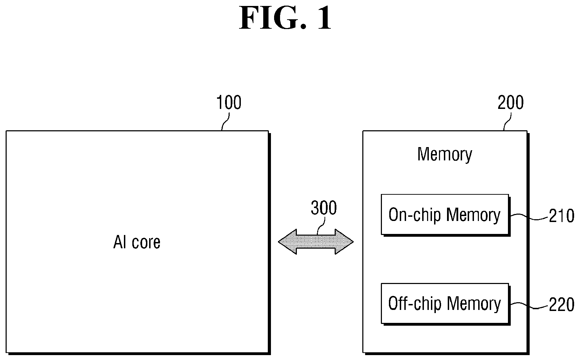

Hereinafter, an AI core system in accordance with some embodiments will be described with reference to FIGS. 1 to 8.

FIG. 1 is a block diagram for illustrating an AI core system in accordance with some embodiments.

Referring to FIG. 1, an AI core system in accordance with some embodiments may include an AI core **100**, a memory **200**, and an external interface **300**.

The AI core **100** may be a processing module specialized in performing the task of deep learning calculations. The AI core **100** may be implemented by one chip, a plurality of chips, or a part of system on chip (SoC) combined to the system. The AI core **100** maybe specialized in performing convolutional calculation, i.e., matrix multiplication, so that the AI core **100** may perform deep learning training and inferencing more efficiently than general central processing unit (CPU) or graphics processing unit (GPU). The AI core **100** may be implemented as a hardware module.

The memory **200** may transmit programs, input data and control signals to the AI core **100** through the external interface **300**. Also, the memory **200** may receive output data from the AI core **100** and store the output data.

The memory **200** may include an on-chip memory **210** and an off-chip memory **220**. The on-chip memory **210** may be, for example, a Static Random-Access Memory (SRAM) which is formed in the same chip as the AI core **100**. The on-chip memory **210** may be a shared memory which is shared by a plurality of cores. However, the embodiment is not limited thereto.

The off-chip memory **220** may be an external memory which is formed separately from the AI core **100**. The off-chip memory **220** may include, for example, at least one of Dynamic Random-Access Memory (DRAM), NAND flash memory, NOR flash memory, or 3D cross point memory (3D XPoint). However, the embodiment is not limited thereto.

The memory **200** may provide programs and input data to the AI core **100** through the external interface **300**, receive output data from the AI core **100** through the external interface 300 and store the output data.

The external interface **300** may exchange data between the AI core **100** and the memory **200**. Further, the external interface **300** may transmit programs or control signals.

The external interface **300** may be implemented in various form. Specifically, if the AI core **100** is implemented as SoC, the external interface **300** may be a main data bus. Alternatively, if the AI core **100** is implemented as a single chip, the external interface **300** may be an external chip interface.

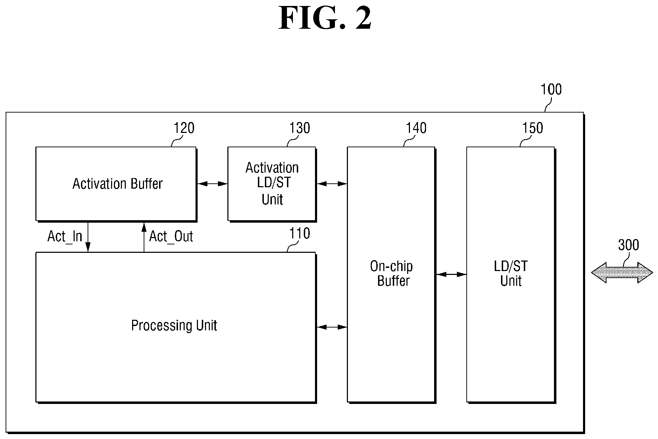

FIG. 2 is a block diagram for illustrating the AI core of FIG. 1;

Referring to FIG. 2, the AI core **100** may include a processing unit **110**, an activation buffer **120**, an activation load/store unit **130**, an on-chip buffer **140**, and a load/store unit **150**.

The processing unit **110** may be a module that performs calculations. The processing unit **110** may perform not only one-dimensional calculations but also two-dimensional matrix calculations, i.e., convolution operations. The processing unit **110** may receive an input activation **Act_In,** multiply it by a weight, and then add it to generate an output activation **Act_Out**.

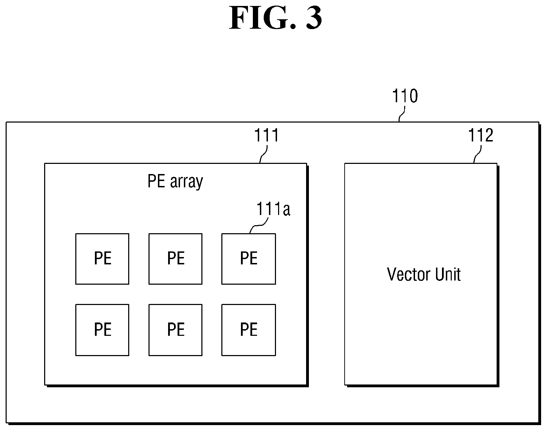

FIG. 3 is a block diagram for illustrating the processing unit of FIG. 2;

Referring to FIGS. 2 and 3, the processing unit **110** may include a PE array **111** and a vector unit **112**.

The PE array **111** may receive the input activation **Act**_**In** and the weight and perform multiplication on them. In this case, each of the input activation **Act**_**In** and the weight may be in the form of matrices and calculated via convolution. Through this, the PE array **111** may generate an output activation **Act_Out**.

The PE array **111** may include at least one processing element **111a**. The processing elements **111a** may be aligned with each other to perform multiplication of one input activation **Act_In** and one weight.

The PE array **111** may sum values for each multiplication to generate a subtotal. This subtotal may be utilized as an output activation **Act_Out**. The PE array **111** performs two-dimensional matrix multiplication, and thus, may be referred to as a 2D matrix compute unit.

The vector unit **112** may mainly perform one-dimensional calculations. The vector unit **112**, together with the PE array **111**, may perform deep learning calculations. Through this, the processing unit **110** may be specialized for necessary calculations. In other words, the AI core **100** has calculation modules, and each of the calculation modules performs a large amount of two-dimensional matrix multiplications and one-dimensional calculations, and thus, can efficiently perform deep learning tasks, respectively.

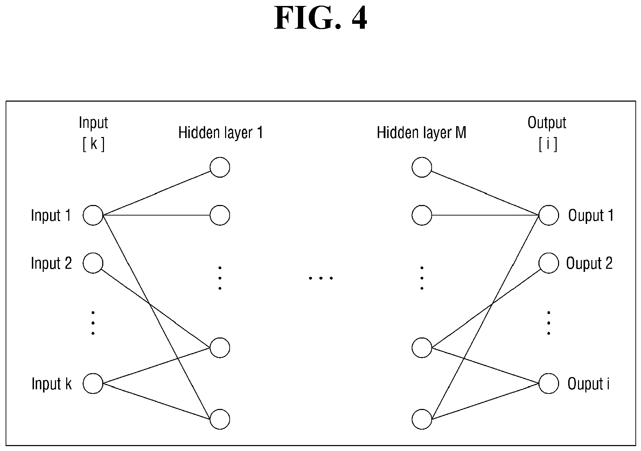

FIG. 4 is a conceptual diagram for illustrating a structure of neural network of deep learning operation performed by the processing unit of FIG. 3;

Referring to FIG. 4, a neural network implemented by the PE array **111** may include input layers **Input 1** to **Input k** which include input nodes receiving input data, output layers **Output 1** to **Output i** which include output nodes outputting output data, and M (where M is a positive integer) hidden layers which are located between the input layers and the output layers.

In this case, weights may be set to edges that connects nodes of the layers. The weights or whether there is any edge may be added, eliminated, or updated during training. Thus, through the training, the nodes and the weights of the edges, where the nodes and the edges are located between k input nodes and i output nodes, may be updated.

Before performing of training of the neural network, all nodes and edges may be set to initial values. However, when information is inputted accumulatively, nodes and weights of edges may be changed. Through this, parameters inputted as training factors and values assigned to the output nodes may be matched.

Also, the nodes and the weights of the edges, where the nodes and the edges are located between the input nodes and the output nodes comprising the neural network may be updated by the training.

Referring to FIG. 2 again, the activation buffer **120** may provide the input activation **Act_In** to the processing unit **110**, and receive the output activation **Act_Out** from the processing unit **110**. The activation buffer **120** may temporarily store the input activation **Act_In** and the output activation **Act_Out**.

The input activation **Act**_**In** and the output activation **Act_Out** may refer to input values and output values of the layers of a neural network, respectively. In this case, if there are a plurality of layers in the neural network, the output value of previous layer becomes the input value of next layer, and thus, the output activation **Act_Out** of the previous layer may be utilized as the input activation **Act_In** of the next layer.

The activation buffer **120** may quickly provide the activation to the processing unit **110**, in particular, the PE array **111**, which has a large amount of calculation, and may quickly receive the activation, thereby increasing the calculation speed of the AI core **100**.

The activation load/store unit **130** may transmit the input activation **Act_In** from the on-chip buffer **140** to the activation buffer **120** and transmit the output activation **Act_Out** from the activation buffer **120** to the on-chip buffer **140**. That is, the activation load/store unit **130** may perform both load operations and store operations of the activations.

The on-chip buffer **140** is a memory located inside the AI core **100**, and the AI core **100** may receive all input data required for operations from the outside and temporarily store the input data in the on-chip buffer **140**. Also, the on-chip buffer **140** may temporarily store the output data calculated by the AI core **100** in order to transmit the output data to the outside.

The on-chip buffer **140** may transmit the input activation **Act_In** to the activation buffer **120** by the activation load/store unit **130** and receive the output activation **Act_Out**. The on-chip buffer **140** may directly transmit and receive data to and from the processing unit **110** in addition to the activation load/store unit **130**. That is, the on-chip buffer **140** may exchange data with each of the PE array **111** and the vector unit **112**.

The load/store unit **150** may receive at least one of input data, program or control signals from the outside through the external interface **300**. The load/store unit **150** may transmit at least one of the received data, the received program, or the received control signals to the on-chip buffer **140**.

Similarly, the load/store unit **150** may transmit output data to the outside through the external interface **300**. The load/store unit **150** may transmit the output data generated by the processing unit **110**.

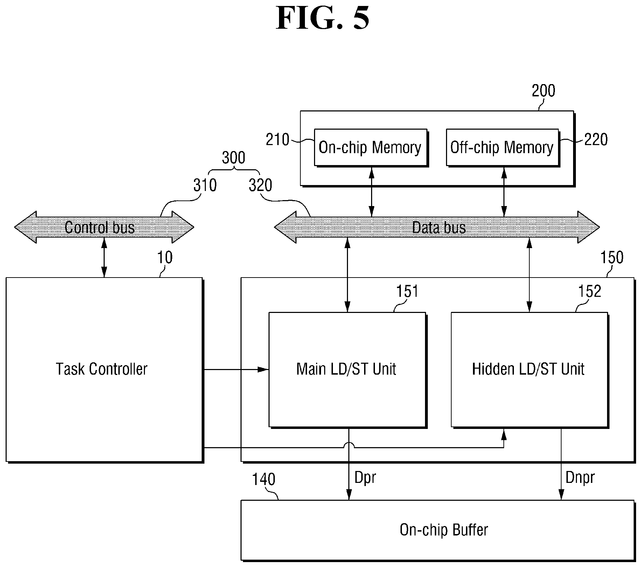

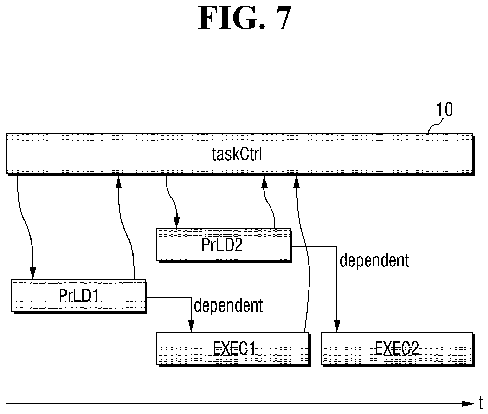

FIG. 5 is a block diagram illustrating an operation of the load/store unit of FIG. 7.

Referring to FIG. 5, a task controller **10** may be implemented by the AI core **100**. The task controller **10** may be a module that controls operations of the AI core **100**. The task controller **10** may be a module logically implemented by the AI core **100**. However, the embodiment is not limited thereto.

The external interface **300** may include a control bus **310** and a data bus if the AI core **100** is a SoC. In this case, the control bus **310** may be a bus to transmit control signals, and the data bus **320** may be a bus to transmit input data and output data.

The control bus **310** may transmit control signals for load or store for current operation to the task controller **10**. For example, the task controller **10** may transmit at least one of a load instruction or a standby load instruction to the load/store unit **150**. Alternatively, the task controller **10** may transmit at least one of a store instruction or a standby store instruction to the load/store unit **150**. The load/store unit **150** may perform a load/store operation according to at least one of the load instruction, the store instruction, the standby load instruction, or the standby store instruction.

In this case, the load instruction and the store instruction may indicate instructions for a program or data for an operation currently being performed by the processing unit **110**, and the standby load instruction and the standby store instruction may indicate instructions for a program or data for an operation to be performed by the processing unit **110**.

Each of the load instruction, the standby load instruction, the store instruction, and the standby store instruction may each include the following details.
Dscrptr{src, dst, burst size, #burst}

In this case, src may indicate a source, that is, an address of data to be loaded or stored, dst may indicate a destination, that is, an address to which data is transmitted, burst size may indicate a burst size, that is, a division size, and #burst may indicate a burst number, that is, the number of divisions. However, the embodiment is not limited thereto.

The load/store unit **150** may include a main load/store unit **151** and a hidden load/store unit **152**. The main load/store unit **151** may perform a main load/store operation during a load/store operation.

For example, the main load/store unit **151** may fetch a load instruction and issue the load instruction. Here, the issue may indicate an operation for determining whether instruction may be performed and for continuously performing a process, if possible.

The main load/store unit **151** may access an off-chip memory **220** through the data bus **320** according to the issued load instruction to receive first load data **Dpr** and transmit the first load data **Dpr** to the on-chip buffer **140**. In this case, the first load data **Dpr** may have a high priority.

The hidden load/store unit **152** may perform a standby load/store operation during the load/store operation. For example, the hidden load/store unit **152** may fetch a standby load instruction and issue the standby load instruction.

The hidden load/store unit **152** may access the off-chip memory **320** through the data bus **320** according to the issued load instruction to receive second load data **Dnpr** and transmit the second load data **Dnpr** to the on-chip buffer **140**. In this case, the second load data **Dnpr** may have a low priority. That is, the first load data **Dpr** may have a relatively higher priority than the second load data **Dnpr**. That is, the on-chip buffer **140** may store the first load data **Dpr** earlier than the second load data **Dnpr**.

In this case, a priority may be identified in the form of tagging to data. Accordingly, the main load/store operation for the operation currently being performed may not be delayed by a standby load/store operation. That is, the standby load/store operation may not interfere with the main load/store operation at all. Also, the standby load/store operation may be performed by using bandwidths other than the bandwidth of the external interface **300** used for the main load/store operation. That is, calculations may be performed after load operations of a program and data are performed in time series first, and time of the calculations may be much longer than time of the load operation.

Accordingly, the AI core system according to the embodiment may maximize utilization of a bandwidth by allocating a bandwidth that is not utilized during a calculation to a standby operation.

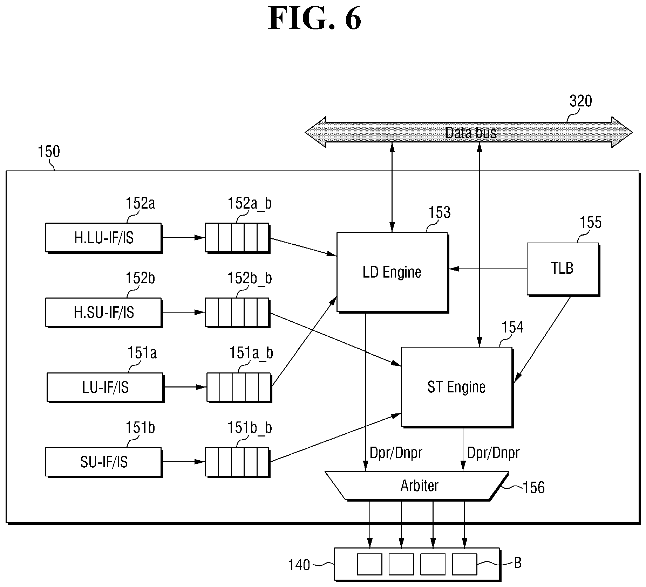

FIG. 6 is a block diagram specifically illustrating a structure of the load/store unit of FIG. 5.

Referring to FIG. 6, the load/store unit **150** may include a load unit **151a**, a store unit **151b**, a load buffer **151a_b**, a store buffer **151b_b**, a hidden load unit **152a**, a hidden load buffer **152a_b**, a hidden store unit **152b**, a hidden store buffer **152b_b**, a load engine **153**, a store engine **154**, and a translation lookaside buffer **155** and an arbiter **156**.

The load unit **151a** may fetch a load instruction from the task controller **10** and issue the load instruction. When the load unit **151a** provides the issued load instruction to the load buffer **151a_b**, the load buffer **151a_b** may sequentially transmit a memory access request to the load engine **153** according to input order.

Also, the store unit **151b** may fetch a store instruction from the task controller **10** and issue the store instruction. When the store unit **151b** provides the issued store instruction to the store buffer **151b_b**, the store buffer **151b_b** may sequentially transmit a memory access request to the store engine **154** according to input order.

The hidden load unit **152a** may fetch a standby load instruction from the task controller **10** and issue the standby load instruction. When the hidden load unit **152a** provides the issued standby load instruction to the hidden load buffer **152a_b**, the hidden load buffer **152a_b** may sequentially transmit a memory access request to the load engine **153** according to input order.

Also, the hidden store unit **152b** may fetch a standby store instruction from the task controller **10** and issue the standby store instruction. When the hidden store unit **152b** provides the issued standby store instruction to the hidden store buffer **152b_b**, the hidden store buffer **152b_b** may sequentially transmit a memory access request to the store engine **154** according to an input order.

The load engine **153** may receive a memory access request to fetch the first load data **Dpr** and the second load data **Dnpr** through the data bus **320**. In this case, the load engine **153** may quickly find data in the translation lookaside buffer **155** by using a translation table of the recently used virtual address and physical address. When there is no virtual address of the load engine **153** in the translation lookaside buffer **155**, address translation information may be found in the memory **200**.

The first load data **Dpr** may be data corresponding to the memory access request received from the load buffer **151a_b,** and the second load data **Dnpr** may be data corresponding to the memory access request received from the hidden load buffer **152a_b**.

In this case, the load buffer **151a_b** and the hidden load buffer **152a_b** do not simultaneously transmit memory access requests to the load engine **153**. That is, the hidden load unit **152a** and the hidden load buffer **152a_b** may identify time when the load unit **151a** and the load buffer **151a_b** do not transmit the memory access request to the load engine 153 and transmit the memory access request to the load engine **153**. That is, the hidden load buffer **152a_b** may operate only when an instruction issue operation is stalled in the load buffer **151a_b.**

The arbiter **156** may receive the first load data **Dpr** and the second load data **Dnpr** from the load engine **153**. The arbiter **156** may transmit the first load data **Dpr** and the second load data **Dnpr**, which are input in a round-robin manner, to the banks **B** of the on-chip buffer **140**, respectively. That is, the arbiter **156** sequentially distributes data to the banks **B** of the on-chip buffer **140**, and when the second load data **Dnpr** is added, the first load data **Dpr** may be delayed in general.

However, the AI core in accordance with some embodiments of the disclosure may prevent processing of the first load data **Dpr** from being delayed even when the second load data **Dnpr** is added, by giving a high priority to the first load data **Dpr**.

This priority may be tagged by the load engine **153**. However, the embodiment is not limited thereto. That is, the load unit **151a** and the hidden load unit **152a** may determine in advance information on the priority and transmit the information.

The store engine **154** may receive a memory access request to fetch first store data **Dpr** and second store data **Dnpr** through the data bus **320**. In this case, the store engine **154** may quickly find data in the translation lookaside buffer **155** by using a translation table including the recently used virtual address and physical address. When the virtual address of the store engine **154** is not in the translation lookaside buffer **155**, address translation information may be found in the memory **200**.

The first store data **Dpr** corresponds to the memory access request received from the store buffer **151b_b**, and the second store data **Dnpr** corresponds to the memory access request received from the hidden store buffer **152b_b**.

In this case, the store buffer **151b_b** and the hidden store buffer **152b_b** do not simultaneously transmit memory access requests to the store engine **154**. That is, the hidden store unit **152b** and the hidden store buffer **152b_b** may transmit the memory access requests to the store engine **154** by identifying time when the store unit **151b** and the store buffer **151b_b** do not transmit the memory access requests to the store engine **154**. That is, the hidden store buffer **152b_b** may operate only when an instruction issue operation is stalled in the store buffer **151b_b**.

The arbiter **156** may receive the first store data **Dpr** and the second store data **Dnpr** from the store engine **154**. The arbiter **156** may transmit the first store data **Dpr** and the second store data **Dnpr** input in a round-robin manner from the banks **B** of the on-chip buffer **140** to the data bus **320**, respectively. That is, the arbiter **156** sequentially fetches data from the banks **B** of the on-chip buffer **140**, and thus, when the second store data **Dnpr** is added, processing of the first store data **Dpr** may be delayed in general.

However, the AI core in accordance with some embodiments of the disclosure may prevent processing of the first load data **Dpr** from being delayed even when the second load data **Dnpr** is added, by giving a high priority to the first load data **Dpr**.

This priority may be tagged by the store engine **154**. However, the embodiment is not limited thereto. That is, the store unit **151b** and the hidden store unit **152b** may determine in advance information on the priority and transmit the information.

In this case, the load unit **151a**, the load buffer **151a_b**, the store unit **151b**, the store buffer **151b_b**, the load engine **153**, the store engine **154**, and the translation lookaside buffer **155** and the arbiter **156** may be included in the main load/store unit **151**.

Meanwhile, the hidden load unit **152a**, the hidden load buffer **152a_b**, the hidden store unit **152b**, the hidden store buffer **152b_b**, the load engine **153**, the store engine **154**, and the translation lookaside buffer **155** and the arbiter **156** may be included in the hidden load/store unit **152**.

That is, the main load/store unit **151** and the hidden load/store unit **152** may share the load engine **153**, the store engine **154**, and the translation lookaside buffer **155** and the arbiter **156**. At least one of the load engine **153**, the store engine **154**, or the translation lookaside buffer **155** may be implemented in hardware.

The load engine **153** and the store engine **154** may share some of the same hardware because the main load/store unit **151** and the hidden load/store unit **152** have different use time. Accordingly, resource utilization efficiency of the embodiment may greatly increase.

FIG. 7 is a time diagram illustrating in time series a program load operation of an AI core system in accordance with some embodiments.

Referring to FIG. 7, a first program load **PrLD1** may be performed first by the task controller **10**. A first program is required for a first work execution **EXEC1** and may be a program for a deep learning operation. The first program load **PrLD1** has to be executed earlier than the first work execution **EXEC1**, and thus, the first work execution **EXEC1** may depend on the first program load **PrLD1**.

A general AI core may execute the second program load **PrLD2** after the first work execution **EXEC1** is completed. In contrast to this, the AI core **100** according to the embodiment may execute the second program load **PrLD2** in parallel with the first work execution **EXEC1** of a deep learning operation. Accordingly, the second work execution **EXEC2** may start immediately at a point in time when the first work execution **EXEC1** is completed. Through this, the AI core **100** according to the embodiment may dramatically increase the speed of the deep learning operation.

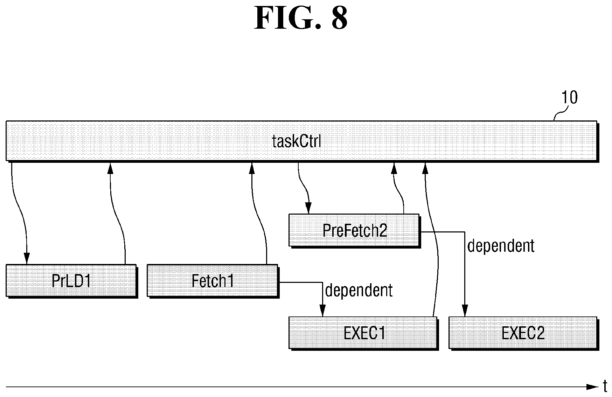

FIG. 8 is a time diagram illustrating in time series a data prefetch operation of an AI core in accordance with some embodiments.

Referring to FIG. 8, the first program load **PrLD1** may be performed first by the task controller **10**. Subsequently, a first fetch **Fetch1** may be performed. The first fetch **Fetch1** may be fetching data for deep learning and inference.

The first work execution **EXEC1** may depend on load of a program and data. Similarly, the second work execution **EXEC2** may depend on load of data in the same manner as a second prefetch **PreFetch2**. The second prefetch **PreFetch2** may indicate fetching of kernel data of a next layer of, for example, a convolutional neural network (CNN) or long short-term memory (LSTM).

The AI core system according to the embodiment may perform the second prefetch **PreFetch2** for fetching data in advance corresponding to the second work execution **EXEC2** during the first work execution **EXEC1** such that the second work execution **EXEC2** may start as soon as the first work execution **EXEC1** is completed. By doing so, a processing speed of the AI core according to the embodiment may be further increased.

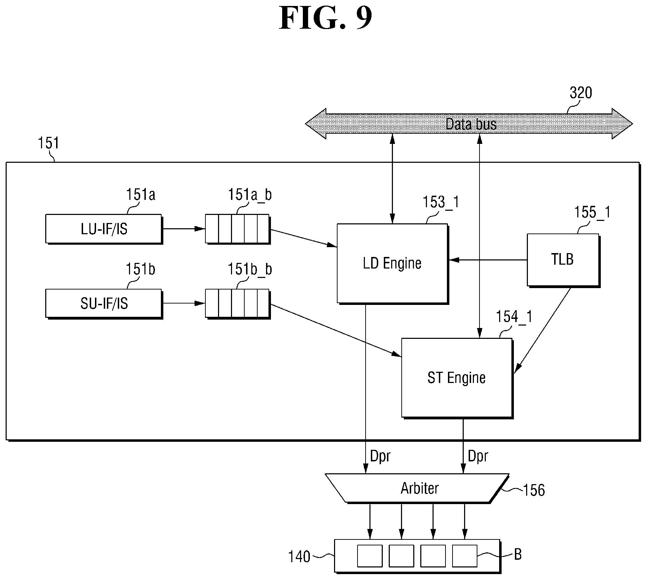

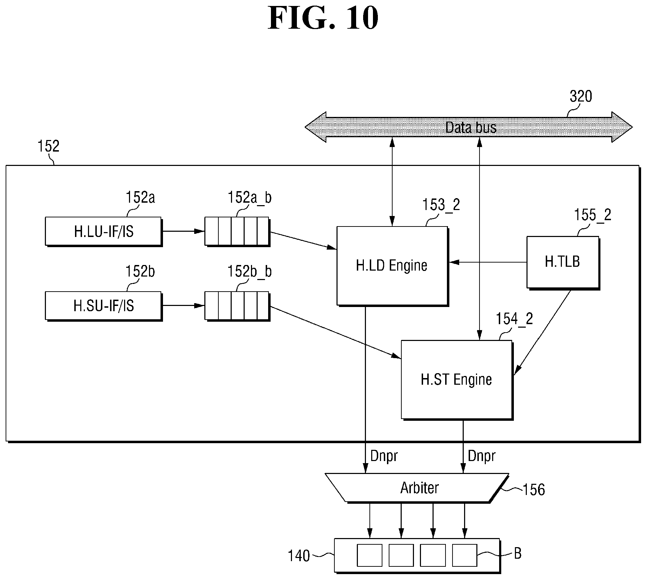

Hereinafter, an AI core and an AI core system in accordance with some embodiments will be described with reference to FIGS. 9 and 10. Redundant descriptions thereof will be simplified or be omitted.

FIG. 9 is a block diagram specifically illustrating the main load/store unit of an AI core in accordance with some embodiments, and FIG. 10 is a block diagram specifically illustrating a hidden load/store unit of an AI core in accordance with some embodiments.

Referring to FIGS. 9 and 10, the load/store unit of the AI core system in accordance with some embodiments of the disclosure may be separated in hardware. That is, the main load/store unit **151** may include the load unit **151a**, the store unit **151b**, the load buffer **151a_b**, the store buffer **151b_b**, a first load engine **153_1**, a first store engine **154_1**, and a first translation lookaside buffer **155_1**.

In addition, the hidden load/store unit **152** may include the hidden load unit **152a**, the hidden store unit **152b**, the hidden load buffer **152a_b**, the hidden store buffer **152b_b**, a second load engine **153_2**, a second store engine **154_2**, and a second translation lookaside buffer **155_2**.

According to the embodiment, the main load/store unit **151** and the hidden load/store unit **152** are physically separated from each other to reduce design difficulty of the AI core **100**, and the load engine **153** and the store engine **154** are not shared with each other to maintain durability for a long time. However, the arbiter **156** has the same setting, and thus, a more accurate numerical value may be obtained.

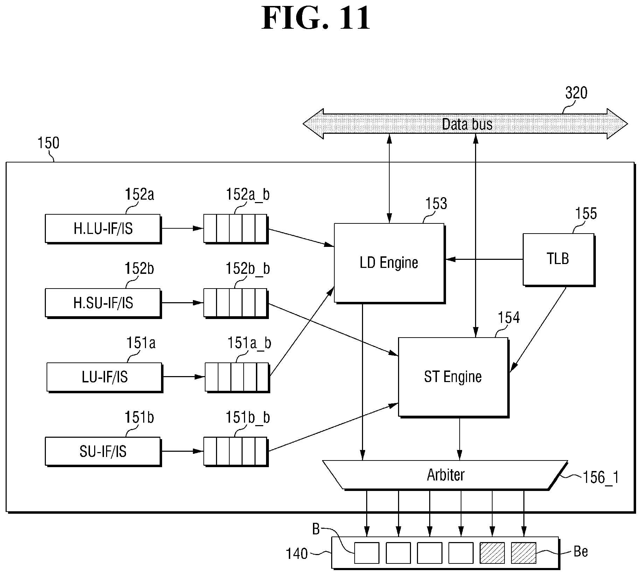

Hereinafter, an AI core and an AI core system in accordance with some embodiments of the disclosure will be described with reference to FIG. 11. Redundant descriptions thereof will be simplified or are omitted.

FIG. 11 is a block diagram for illustrating an AI core system in accordance with some embodiments.

Referring to FIG. 11, in the AI core system in accordance with some embodiments of the disclosure, the load/store unit **150** may include an extension arbiter **156_1**, and the load engine **153** and the store engine **154** may not use data with different priorities. Instead, expansion banks **Be** may be included in the on-chip buffer **140** by further increasing the number of banks **B** included in the on-chip buffer **140**.

That is, when the number of banks **B** increases as the number of inputs increases, there is no need to wait for existing data, and thereby, it is possible to prevent calculation speed of the AI core **100** from being delayed.

The extension arbiter **156_1** may have a reference input/output ratio. In this case, the reference input/output ratio may indicate a ratio between the largest input and the largest output in a range in which an input waiting time does not occur. A value obtained by dividing the number of inputs of the first load data **Dpr**, the second load data **Dnpr**, the first store data **Dpr**, and the second store data **Dnpr** that are input to the extension arbiter **156_1** by the number of the banks **B** and the extension banks **Be** of the on-chip buffer **140** may be less than a reference input/output ratio.

Therefore, main load/store operation may not be damaged only by increasing the number of banks **B** in the on-chip buffer **140** without priority tagging of load data.

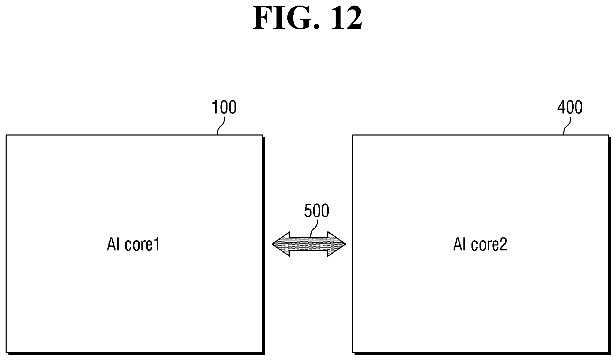

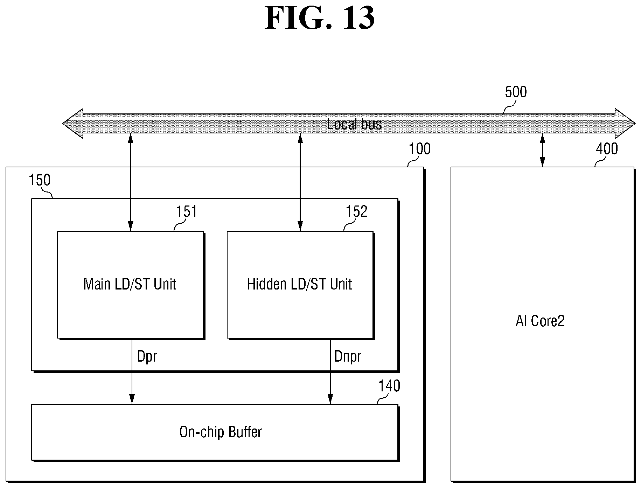

Hereinafter, an AI core and an AI core system in accordance with some embodiments of the disclosure will be described with reference to FIGS. 12 and 13. Redundant descriptions thereof will be simplified or be omitted.

FIG. 12 is a block diagram for illustrating an AI core system in accordance with some embodiments, and FIG. 13 is a bloc diagram specifically illustrating a structure and an operation of the first AI core of FIG. 12.

Referring to FIG. 12, the AI core system in accordance with some embodiments of the disclosure may include a first AI core **100**, a second AI core **400**, and the local bus **500**.

The first AI core **100** may be the same as the AI core **100** of FIG. 1. The second AI core **400** may be another core separated from the first AI core **100**. The first AI core **100** may exchange data with the second AI core **400** through the local bus **500**.

The local bus **500** may be a path for transmitting data between the cores. The local bus 500 may increase speed of a multi-core system through communication between the cores.

Referring to FIG. 13, the load/store unit **150** of the first AI core **100** may communicate with the second AI core **400** through the local bus **500**. In particular, the main load/store unit **151** and the hidden load/store unit **152** may load and store data through a local bus.

Through this, the embodiment may maximize utilization of a bandwidth in data exchange between cores.

Hereinafter, a load/store method of an AI core system in accordance with some embodiments of the disclosure will be described with reference to FIGS. 6, 7 and 14 to 16. Redundant descriptions thereof will be simplified or be omitted.

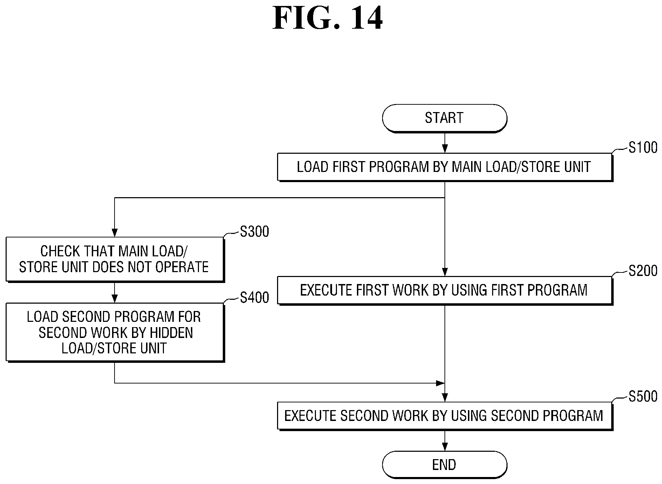

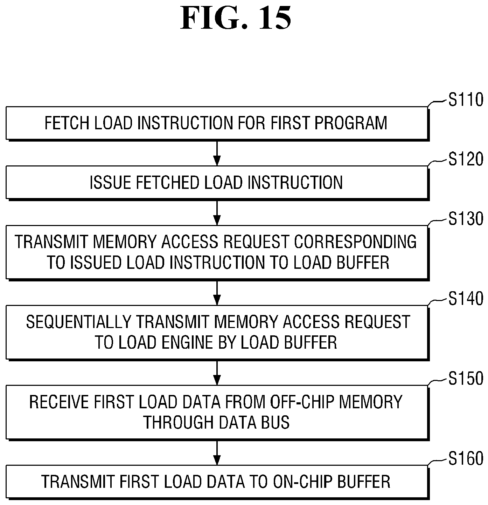

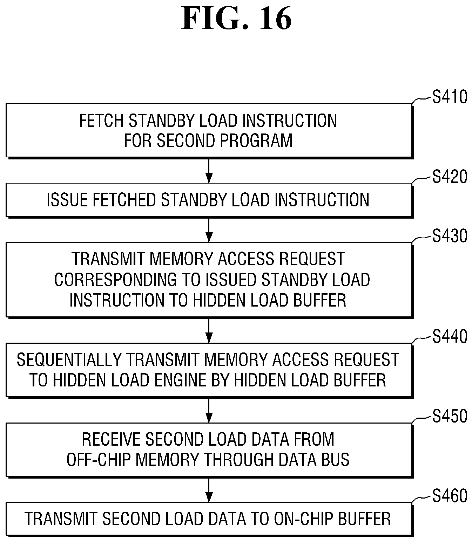

FIG. 14is a flowchart illustrating a load/store method of an AI core system in accordance with some embodiments, FIG. 15 is a flowchart specifically illustrating the loading a first program of FIG. 14, and FIG. 16is a flowchart specifically illustrating the loading a second program of FIG. 14.

Referring to FIG. 14, the main load/store unit loads a first program at **S100**.

Referring to FIG. 15 in more detail, a load instruction for the first program may be fetched at **S110**, and the fetched load instruction may be issued at **S120**.

Subsequently, a memory access request corresponding to the issued load instruction is transmitted to the load buffer at **S130**, and the load buffer sequentially transmits the memory access request to the load engine at **S140**.

Next, first load data is received from an off-chip memory through a data channel at **S150**, and the first load data is transmitted to an on-chip buffer at **S160**.

Referring to FIG. 14 again, a first work is executed by using the first program at **S200**.

Specifically, referring to FIG. 7, the first program is required for the first work execution **EXEC1** and may be used for a deep learning operation. Because the first program load **PrLD1** has to precede the first work execution **EXEC1**, that is, the first work, the first work execution **EXEC1** may depend on the first program load **PrLD1**.

Referring to FIG. 14 again, after checking that the main load/store unit does not operate at **S300**, the hidden load/store unit loads a second program for a second work at **S400**.

Referring to FIG. 16 in more detail, a standby load instruction for the second program may be fetched at **S410**, and the fetched standby load instruction may be issued at **S420**.

Subsequently, a memory access request corresponding to the issued standby load instruction is transmitted to the hidden load buffer at **S430**, and the hidden load buffer sequentially transmit the memory access request to a load engine at **S440**.

Next, second load data is received from the off-chip memory through the data bus at **S450**, and the second load data is transmitted to the on-chip buffer at **S460**.

Specifically, referring to FIG. 7, the AI core **100** according to the embodiment may execute the second program load **PrLD2** in parallel with the first work execution **EXEC1** of the deep learning operation. Accordingly, the second work execution **EXEC2** may start immediately at a point in time when the first work execution **EXEC1** is completed. Through this, the AI core **100** according to the embodiment may dramatically increase a speed of the deep learning operation.

Also, referring to FIG. 6, the hidden load unit **152a** and the hidden load buffer **152a_b** may detect the time when the load unit **151a** and the load buffer **151a_b** do not transmit a memory access request to the load engine **153** and may transmit a memory access request to the load engine **153**.

Step S300 and step S400 may be performed in parallel with step S200.

Referring to FIG. 14 again, the second work is executed by using the second program at S500.

Specifically, referring to FIG. 7, the second program may be required for the second work execution **EXEC2** and may be used for a deep learning operation. Because the second program load **PrLD2** has to precede the second work execution **EXEC2**, that is, the second work, the second work execution **EXEC2** may depend on the second program load **PrLD2**.

In the load/store method of the AI core according to the embodiment, the first work is executed in parallel with load of the second program for the second work, and thus, efficiency of the operations is increased, and a bandwidth of the external interface **300** that has not been utilized may be used to the maximum.

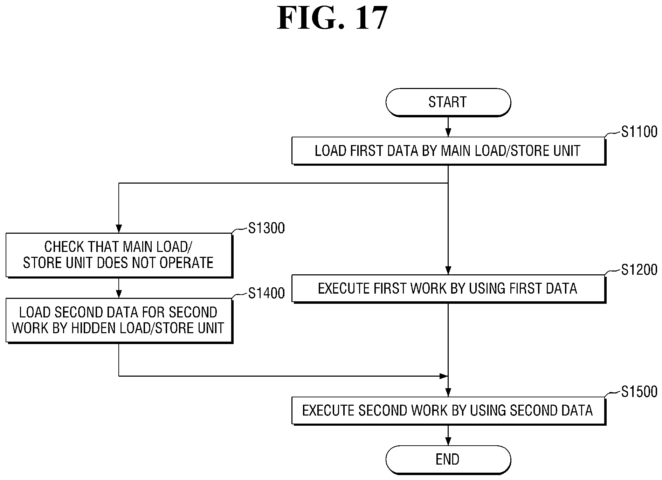

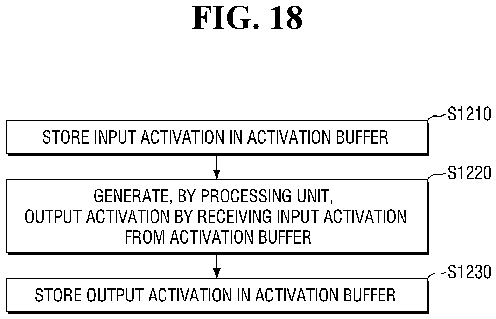

Hereinafter, a load/store method of an AI core system in accordance with some embodiments of the disclosure will be described with reference to FIGS. 17 and 18. Redundant descriptions thereof will be simplified or be omitted.

FIG. 17 is a flowchart illustrating a load/store method of an AI core system in accordance with some embodiments, and FIG. 18 is a flowchart specifically illustrating the executing the first work of FIG. 17.

Referring to FIG. 17, the main load/store unit loads first data at **S1100**.

Specifically, referring to FIG. 8, the first fetch **Fetch1** may be performed. The first fetch **Fetch1** may be fetching data for deep learning and inference.

Referring to FIG. 17 again, a first work is executed by using the first data at **S1200**.

In more detail, referring to FIG. 18, an input activation is stored in an activation buffer at **S1210**.

Specifically, referring to FIG. 2, the activation load/store unit **130** may transmit the input activation **Act_In** from the on-chip buffer **140** to the activation buffer **120**. The activation buffer **120** may temporarily store the input activation **Act_In**.

Referring to FIG. 18 again, a processing unit receives an input activation from the activation buffer to generate an output activation at **S1220**. Then, the activation buffer stores the output activation at **S1230**.

Referring to FIG. 17 again, after checking that the main load/store unit does not operate at **S1300**, the hidden load/store unit loads second data for a second work at **S1400**.

Step S1300 and step S1400 may be performed in parallel with step S1200.

Referring to FIG. 17 again, a second work is executed by using the second data at **S1500**.

Specifically, referring to FIG. 8, the second work execution **EXEC2** may also be dependent because data has to be loaded like the second prefetch **EXEC2**. The AI core system according to the embodiment may perform the second prefetch **PreFetch2** that fetches data corresponding to the second work execution **EXEC2** in advance during the first work execution **EXEC1**, and thereby, as soon as the first work execution **EXEC1** is completed, the second work execution **EXEC2** may start immediately.

While the inventive concept has been particularly shown and described with reference to exemplary embodiments thereof, it will be understood by those of ordinary skill in the art that various changes in form and details may be made therein without departing from the spirit and scope of the inventive concept as defined by the following claims. It is therefore desired that the embodiments be considered in all respects as illustrative and not restrictive, reference being made to the appended claims rather than the foregoing description to indicate the scope of the invention.

## Claims

1. An AI core comprising:
a processing unit configured to receive an input activation and a weight and generate an output activation by two-dimensional matrix calculation; and
a load/store unit configured to transmit program received through an external interface and input data to an on-chip buffer, and to perform a load/store operation for transmitting output data from the on-chip buffer to the external interface,
wherein the load/store operation includes a main load/store operation for a current operation that is performed by the processing unit, and a standby load/store operation for a standby operation that is performed by the processing unit after the current operation.

2. The AI core of claim 1, further comprising:
an activation buffer configured to provide the input activation to the processing unit, receive the output activation from the processing unit, and temporarily store the input activation and the output activation;
the on-chip buffer configured to temporarily store the program used for the calculation which is performed by the processing unit and the input data including the input activation and the weight, transmit the stored program and the input data to the processing unit, and temporarily store the output data received from the processing unit; and
an activation load/store unit configured to transmit the input activation from the on-chip buffer to the activation buffer and transmit the output activation from the activation buffer to the on-chip buffer.

3. The AI core of claim 1, wherein the standby load/store operation is performed by using a bandwidth that is not used by the main load/store operation among bandwidths of the external interface.

4. The AI core of claim 1, wherein the load/store unit comprises:
a main load/store unit configured to perform the main load/store operation and transmit first load data and first store data to the on-chip buffer; and
a hidden load/store unit configured to perform the standby load/store operation and transmit second load data and second store data to the on-chip buffer.

5. The AI core of claim 4, wherein the hidden load/store unit comprises:
a hidden load unit configured to fetch a standby load instruction received from a task controller to issue the standby load instruction;
a hidden store unit configured to fetch a standby store instruction received from the task controller to issue the standby store instruction;
a hidden load buffer configured to sequentially receive a memory access request corresponding to the standby load instruction from the hidden load unit;
a hidden store buffer configured to sequentially receive a memory access request corresponding to the standby store instruction from the hidden store unit;
a hidden load engine configured to receive the memory access request from the hidden load buffer and transmit the second load data to the on-chip buffer; and
a hidden store engine configured to receive the memory access request from the hidden store buffer and transmit the second store data to the on-chip buffer.

6. The AI core of claim 5, wherein the load/store unit further comprises a translation lookaside buffer configured to store a translation table of recently used virtual memory addresses and physical memory addresses.

7. The AI core of claim 4, the main load/store unit comprises:
a load unit configured to fetch a load instruction and to issue the load instruction;
a store unit configured to fetch a store instruction and to issue the store instruction;
a load buffer configured to sequentially receive a memory access request from the load unit;
a store buffer configured to sequentially receive a memory access request from the store unit;
a load engine configured to receive the memory access request from the load buffer and transmit the first load data to the on-chip buffer; and
a store engine configured to receive the memory access request from the store buffer and transmit the first store data to the on-chip buffer.

8. The AI core of claim 4, wherein
the first load data has a higher priority than the second load data, and
the first store data has a higher priority than the second store data.

9. The AI core of claim 8, wherein the priority is tagged to the first load data, the second load data, the first store data, and the second store data.

10. The AI core of claim 9, wherein the priority is tagged by the load engine or the store engine.

11. The AI core of claim 4, wherein the load/store unit further comprises an arbiter configured to receive the first load data, the second load data, the first store data, and the second store data and transmit the first load data, the second load data, the first store data, and the second store data to the on-chip buffer in a round-robin manner.

12. The AI core of claim 11, wherein
the on-chip buffer includes a plurality of banks,
a value obtained by dividing a number of inputs of the first load data, the second load data, the first store data, and the second store data per unit clock cycle by a number of banks of the on-chip buffer is less than a reference input/output ratio of the arbiter, and
the reference input/output ratio is a largest input/output ratio value in a range in which waiting time of each of the first load data, the second load data, the first store data, and the second store data does not occur by the arbiter.

13. The AI core of claim 4, wherein the hidden load/store unit and the main load/store unit share at least a part of hardware with each other.

14. The AI core of claim 4, wherein the hidden load/store unit and the main load/store unit are implemented by different hardware.

15. The AI core of claim 1, wherein the processing unit comprises:
a PE array configured to perform two-dimensional matrix calculation for sequentially multiplying the input activation and the weight, and to generate the output activation, and
a vector unit configured to perform one-dimensional calculation.

16. The AI core of claim 1, wherein the external interface includes any one of a data bus, an external chip interface, or a local bus.

17. An AI core system that includes a memory for storing a program for calculation and input data, a bus for transmitting the input data and a control signal from the memory, and an AI core for receiving the program, the input data, and the control signal to perform two-dimensional matrix calculation, and generates output data, wherein the AI core comprises:
a load/store unit configured to load the program and the input data from the memory and store the output data in the memory;
a processing unit configured to perform calculation by using the program and the input data; and
an on-chip buffer configured to temporarily store the program, the input data, and the output data between the processing unit and the load/store unit,
wherein the bus includes a control bus for transmitting the control signal and a data bus for transmitting the input data and the output data,
the load/store unit performs a main load/store operation for a current operation currently performed by the processing unit, and a standby load/store operation for a standby operation performed by the processing unit after the current operation, and
the standby load/store operation is performed by using a bandwidth that is not used by the main load/store operation among bandwidths of the data bus.

18. The AI core system of claim 17, wherein the memory comprises:
an on-chip memory that is formed in the same chip as the AI core; and
an off-chip memory that is formed separately from the AI core.

19. The AI core system of claim 17, wherein the AI core is a first AI core, further comprising a second AI core different from the first AI core,
wherein the bus comprises a local bus for transmitting the input data and the output data between the first AI core and the second AI core,
wherein the load/store unit performs the standby load/store operation by using a bandwidth that is not used by the main load/store operation among bandwidths of the local bus.

20. The AI core system of claim 17, wherein
the load/store unit comprises a main load/store unit configured to perform the main load/store operation, and a hidden load/store unit configured to perform the standby load/store operation, and
the standby load/store operation has a lower priority than the main load/store operation.

21. The AI core system of claim 20, wherein the priority is identified in a tagged form.

22. The AI core system of claim 17, wherein the AI core further comprising:
an activation buffer configured to provide an input activation to the processing unit and receive an output activation from the processing unit; and
an activation load/store unit configured to fetch the input activation from the on-chip buffer, transmit the input activation to the activation buffer, and transmit the output activation from the activation buffer to the on-chip buffer.

23. A load/store method of an AI core system, comprising:
loading a first program for a first work by a main load/store unit;
executing the first work by using the first program;
loading, by a hidden load/store unit, a second program for a second work to be executed after the first work, when the main load/store unit does not operate during the first work; and
executing the second work by using the second program when the first work and the loading of the second program are completed.

24. The load/store method of claim 23, wherein the loading of the second program comprises:
fetching a standby load instruction for the second program;
issuing the fetched standby load instruction;
transmitting a memory access request corresponding to the issued standby load instruction to a hidden load buffer;
sequentially transmitting, by the hidden load buffer, the memory access request to a load engine;
receiving, by the load engine, second load data from an off-chip memory through a data bus according to the memory access request; and
transmitting the second load data to an on-chip buffer.

25. The load/store method of claim 24, wherein the loading of the first program comprises:
fetching a load instruction for the first program;
issuing the fetched load instruction;
transmitting a memory access request corresponding to the issued load instruction to a load buffer;
sequentially transmitting, by the load buffer, the memory access request to the load engine;
receiving, by the load engine, first load data from the off-chip memory through the data bus according to the memory access request; and
transmitting the first load data to the on-chip buffer.

26. The load/store method of claim 25, wherein the first load data has a higher priority than the second load data.

27. A load/store method of an AI core system, comprising:
performing, by a main load/store unit, a load operation of first data for a first work;
executing the first work by using the first data;
performing, by a hidden load/store unit, a load operation of second data for a second work to be executed after the first work, when checking that the main load/store unit does not operate during the first work; and
executing the second work by using the second data when the first work and the load operation of the second data are completed.

28. The load/store method of claim 27, wherein
the first work is a matrix calculation operation of a first layer of a neural network,
the second work is a matrix calculation operation of a second layer of the neural network, and
the second data is kernel data of the second layer.

29. The load/store method of claim 27, wherein
the first data includes an input activation, and
the executing of the first work includes:
storing the input activation in an activation buffer,
generating an output activation by receiving, the input activation by a processing unit from the activation buffer, and
storing the output activation in the activation buffer.
